# EUROPEAN PATENT SPECIFICATION

(11) **EP 3 122 551 B1**
(45) Date of publication and mention of the grant of the patent: **21.04.2021**
(21) Application number: 15716328.8
(22) Date of filing: 30.03.2015
(51) Int. Cl.: B32B 5/02, B32B 5/12, B32B 5/26

(54) **FIBER-REINFORCED COMPOSITE LAMINATE AND ARTICLES MADE THEREFROM**
FASERVERSTÄRKTES LAMINAT UND DARAUS HERGESTELLTE ARTIKEL
STRATIFIÉ COMPOSITE RENFORCÉ DE FIBRES ET ARTICLES COMPOSÉS DE CELUI-CI

(30) Priority: 28.03.2014 CN 201410122526; 28.03.2014 CN 201420147328 U
(43) Date of publication of application: 01.02.2017
(73) Proprietor: DuPont Safety & Construction, Inc., Wilmington, Delaware 19805 (US)
(72) Inventor: SONG, Tao, Pudong, Shanghai (CN); LI, Xuedong, Pudong Shanghai 200120 (CN); JIN, Lei, Shanghai (CN); SHEN, Haihua, Hanfgzhou Zhejiang 310014 (CN)
(74) Representative: Dannenberger, Oliver Andre
(86) International application number: PCT/US2015/023315
(87) International publication number: WO 2015/149063

(56) References cited:
- WO-A1-89/06190

## Description

### FIELD OF THE INVENTION

This invention relates to composite laminates having high flexural modulus, and articles made therefrom, having utility for housing or protective covers for mobile electronic devices.

### BACKGROUND OF THE INVENTION

Fiber-reinforced composites are well known in the art and are described, for example, in Kirk-Othmer Ency. Chem., Tech.- Supp., Composites, High Performance, pp. 260-281 (J. Wiley & Sons 1984). A composite typically comprises a plurality of reinforcement fibers embedded in thermoset or thermoplastic resin (i.e. the matrix resin). Typically, the fibers give strength and/or stiffness to the composite and are the primary load carrying element of the composite material. The matrix resin maintains fiber orientations and spacings, transmits shear loads to the fibers so that the composite resist bending and compression and determines the maximum service temperature of a composite.

The fibers used in the fiber-reinforced composites may exist in the form of woven fabrics or non-woven sheets of fibers that are plied together. The fibers in a non-woven sheet may be unidirectionally oriented or felted in random orientation. Unidirectional fabrics generally contain a matrix resin to stabilized the structure. For the purpose of the present invention, one or more fibrous layers made from fibers pre-impregnated with a matrix resin and useful to form articles is called "prepregs". Common forms of prepregs include impregnated woven fabrics, felt mats as well as unidirectional fabrics.

U.S. Patent Application Publication No. 2009/0229748A1 discloses a process for producing composite fiber components. The composite fiber component comprises fiber-containing layers pre-impregnated with a matrix resin and dry fiber-containing layers being alternately deposited on one another. The fiber-containing layers may consist of one or more layers of a woven structure, a laid structure, or one or more unidirectional fibers layers. The fiber materials for the dry and pre-impregnated layers can be glass fibers, carbon fibers, aramid fibers, or a combination thereof. Additionally, the used matrix resins may be based on thermoset resin or thermoplastics.

U.S. Patent Application Publication No. 2005/0153098 A1 discloses hybrid laminates comprising two or more laminae of unidirectional fibers in a matrix resin; each said lamina being comprised of two or more fibers of different composition selected from the group consisting of high molecular weight polyethylene, polyaramid, co-polyaramid, PBO, PBT, polyamide, polyester and ceramic fibers.

International Application Publication No. WO 91/19755 A1 discloses prepregs comprising unidirectional fibers such as glass fibers, carbon fibers, aramid fibers, impregnated with a mixture of epoxy resin and phenolic resin.

WO 89/06190 A1 discloses a ballistic-resistant composite comprised of one or more layers, at least one of said layers comprising a network of high strength filaments.

Each of the laminate constructions cited above represented progress toward the goals to which they were directed. However, none described the specific constructions of the composite laminates of this invention, and none satisfied all of the performance requirements met by this invention.

### SUMMARY OF THE INVENTION

This invention provides a composite laminate consisting essentially of:
(a) a layer of a woven fabric as the top layer, and
(b) at least one layer of a unidirectional fabric;
wherein
the composite laminate has a total thickness of from 0.1 mm to 2 mm;
the woven fabric (a) comprises fibers produced from poly(p-phenylene terephthalamide) homopolymer, poly(p-phenylene terephthalamide) copolymer, poly(m-phenylene isophthalamide) homopolymer, poly(m-phenylene isophthalamide) copolymer, polysulfonamide homopolymer, polysulfonamide copolymer, and mixture thereof;
the unidirectional fabric (b) comprises high modulus fibers produced from poly(p-phenylene terephthalamide) homopolymer or poly(p-phenylene terephthalamide) copolymer, the fibers having a tensile modulus of at least 100 GPa; and
the woven fabric (a) and the unidirectional fabric (b) each independently comprise a thermoset resin selected from epoxy, polyimide, and mixtures thereof.

This invention also provides articles comprising the composite laminate of the present invention, wherein the articles are housings or protective covers for mobile electronic devices.

### BRIEF DESCRIPTION OF THE DRAWINGS

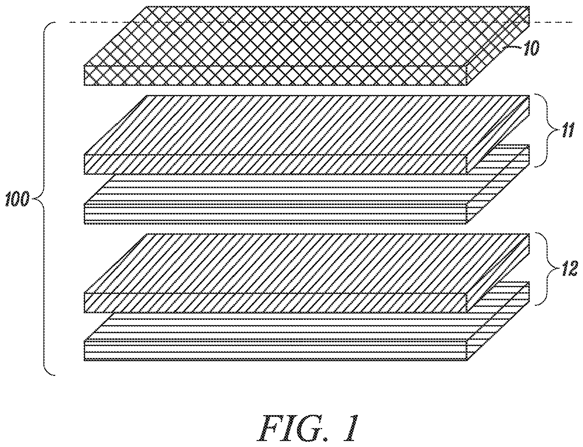

FIG.1 shows an expanded perspective view of one embodiment of the present composite laminate 100, which has a layer construction of a woven fabric layer 10 and two layers of 2-ply unidirectional fabrics 11 and 12, and the fiber orientation of each unidirectional plies is [90/0:90/0] with respect to the longitudinal axis of the composite laminate (represented by dashed line).

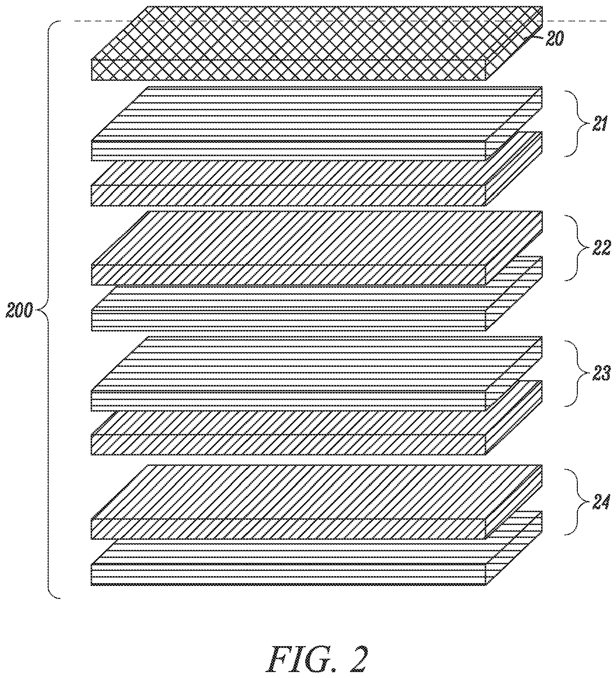

FIG.2 shows an expanded perspective view of another embodiment of the present composite laminate 200, which has a layer construction of a woven layer 20 and four layers of 2-ply unidirectional fabrics 21, 22, 23 and 24, and the fiber orientation of each unidirectional plies is [0/90:90/0:0/90:90/0] with respect to the longitudinal axis of the composite laminate (represented by dashed line).

### DETAILS OF THE INVENTION

"mol%" or "mole%" refers to mole percent.

In describing and/or claiming this invention, the term "homopolymer" refers to a polymer derived from polymerization of one species of repeating unit. For example, the term "poly(p-phenylene terephthalamide) homopolymer" refers to a polymer consisting essentially one species of repeat unit of p-phenylene terephthalamide.

As used herein, the term "copolymer" refers to polymers comprising copolymerized units resulting from copolymerization of two or more comonomers. "Dipolymer" refers to polymers consisting essentially of two comonomer-derived units and "terpolymer" means a copolymer consisting essentially of three comonomer-derived units.

As used herein, the term "fiber" is defined as a relatively flexible, elongate body having a ratio of length to the width of the cross-sectional area perpendicular to that length being at least greater than 10. The fiber cross section can be any shape such as circular, flat or oblong but is typically circular. The fiber cross section can be solid or hollow, preferably, solid. A single fiber may be formed from just one filament or from multiple filaments. A fiber formed from just one filament is referred to herein as either a "single-filament" fiber or a "monofilament" fiber, and a fiber formed from a plurality of filaments is referred to herein as a "multifilament" fiber. As used herein, the term "yarn" is defined as a single strand consisting of multiple fibers that may be untwisted (i.e. flat yarn) or twisted. The term "yarn" is used interchangeably with the term "fiber."

The diameter of fibers is usually characterized as a linear density termed "denier" or "dtex"; "denier" is the weight in grams of 9000 meters of fiber and "dtex" is the weight in grams of 10,000 meters of fiber.

As used herein, a "layer" describes a generally planar arrangement of fibers, which may comprise a woven fabric, a plurality of plies of unidirectional fabric, or any other fabric structure that has been formed from a plurality of randomly oriented fibers, including felts, mats and other structures.

As is conventionally known in the art, a "single-ply" of unidirectionally oriented fibers comprises an arrangement of generally non-overlapping, coplanar fibers that are aligned in a substantially parallel, unidirectional, side-by-side array of fibers. This type of fiber arrangement is also known in the art as a "unidirectional tape", "UD" or "UDT." As used herein, an "array" describes an orderly arrangement of fibers or yarns, which is exclusive of woven fabrics, and a "parallel array" describes an orderly parallel arrangement of fibers or yarns. The term "oriented" as used in the context of "oriented fibers" refers to the alignment of the fibers as opposed to stretching of the fibers.

As used herein, the ":" is meant to separate each fabric layer regardless of the fabric structure being woven or unidirectional; whereas "/" is to meant to separate each ply of a unidirectional fabric layer.

The invention is described in detail hereinunder.

### Aramid Fibers

In the present invention, the fibers suitable to be employed in the woven fabric (a) and the unidirectional fabrics (b) are aromatic polyamide (also abbreviated as "aramid") fibers. The aramid fibers have heat resistance, chemical resistance, and flame retarding properties which are attributed to the structure of aramid molecules. The aramid comprises at least 85% of the amide (-CO-NH-) linkages are attached directly to two aromatic rings.

The woven fabric (a) preferably comprises fibers produced from the group consisting of poly(p-phenylene terephthalamide) homopolymer, poly(p-phenylene terephthalamide) copolymer, poly(m-phenylene isophthalamide) homopolymer, poly(m-phenylene isophthalamide) copolymer, polysulfonamide homopolymer, polysulfonamide copolymer, and mixture thereof. The unidirectional fabric (b) preferably comprises fibers produced from poly(p-phenylene terephthalamide) homopolymer or poly(p-phenylene terephthalamide) copolymer.

Poly(p-phenylene terephthalamide) homopolymer is produced from mole-for-mole polymerization of p-phenylene diamine and terephthaloyl chloride. Also, poly(p-phenylene terephthalamide) copolymers are produced from incorporation of as much as 10 mol% of other diamines with the p-phenylene diamine and of as much as 10 mol% of other diacid chlorides with the terephthaloyl chloride, provided that the other diamines and diacyl chlorides have no reactive groups which interfere with the polymerization reaction. Examples of diamines other than p-phenylene diamine include but not limited to m-phenylene diamine, or 3,4'-diaminodiphenylether. Examples of diacyl chlorides other than terephthaloyl chloride include but not limited to isophthaloyl chloride, 2,6-naphthaloyl chloride, chloroterephthaloyl chloride, or dichloroterephthaloyl chloride.

As used herein, the term "p-aramid" refers to poly(p-phenylene terephthalamide) homopolymer and poly(p-phenylene terephthalamide) copolymers.

Poly(m-phenylene isophthalamide) homopolymer is produced from mole-for-mole polymerization of m-phenylene diamine and isophthaloyl chloride. Also, poly(m-phenylene isophthalamide) copolymers are produced from incorporation of as much as 10 mol% of other diamines with the m-phenylene diamine and of as much as 10 mol% of other diacid chlorides with the isophthaloyl chloride, provided only that the other diamines and diacyl chlorides have no reactive groups which interfere with the polymerization reaction. Examples of diamines other than m-phenylene diamine include but not limited to p-phenylene diamine or 3,4'-diaminodiphenylether. Examples of diacyl chlorides other than isophthaloyl chloride include but not limited to terephthaloyl chloride, 2,6-naphthaloyl chloride, chloroterephthaloyl chloride, or dichloroterephthaloyl chloride.

As used herein, the term "m-aramid" refers to poly(m-phenylene isophthalamide) homopolymer and poly(m-phenylene isophthalamide) copolymers.

Polysulfonamide homopolymers may be produced from mole-for-mole polymerization of a diamine such as 4,4'-diaminodiphenylsulfone (p-DDS) or 3,3'-diaminodiphenylsulfone (m-DDS), and a diacyl chloride such as terephthaloyl chloride or isophthaloyl chloride.

Polysulfonamide copolymers include, for example, copolymers produced from a sulfone containing diamine such as p-DDS and a mixture of terephthaloyl chloride and other diacyl chlorides (e.g., isophthaloyl chloride); and copolymers resulting from a diacyl chloride such as terephthaloyl chloride and a mixture of sulfone diamines such as p-DDS, m-DDS, and as much as 10 mol% of other diamine (e.g., p-phenylene diamine, or m-phenylene diamine).

Preferably, polysulfonamide copolymers are derived from p-DDS, m-DDS and terephthaloyl chloride in a mole ratio of 3:1:4.

As used herein, the term "PSA" refers to polysulfonamide homopolymers and polysulfonamide copolymers.

The polymers or copolymers of aramids described above can be spun into fibers via solution spinning, using a solution of the polymer or copolymer in either the polymerization solvent or another solvent for the polymer or copolymer. Fiber spinning can be accomplished through a multi-hole spinneret by dry spinning, wet spinning, or dry-jet wet spinning (also known as air-gap spinning) to create a multi-filament fiber as is known in the art. The fibers after spinning can then be treated to neutralize, wash, dry, or heat treat the fibers as needed using conventional technique to make stable and useful fibers. Exemplary dry, wet, and dry-jet wet spinning processes are disclosed U.S. Pat. Nos. 3,063,966; 3,227,793; 3,287,324; 3,414,645; 3,869,430; 3,869,429; 3,767,756; and 5,667,743.

Method of producing aramid fibers are disclosed in U.S. Pat. Nos. 4,172,938; 3,869,429; 3,819,587; 3,673,143; 3,354,127; and 3,094,511. Specific methods of making PSA fibers or copolymers deriving from sulfone diamines are disclosed in Chinese Patent Application Publication Nos. 1389604A and 1631941A.

Aramide fiber is also commercially available, for example, KONEX®, TECHNORA®, and TWARON® from Teijin (Japan), APIAIRE® from Unitika, NOMEX® and KEVLAR® from E.I. de Nemours DuPont, USA (hereunder is abbreviated as "DuPont"), HERACRON® from Kolon Industries, Inc. (Korea), SVM™ and RUSAR™ from JSC Kamenskvolokno (Russia), ARMOS™ from JSC Tver'khimvolokno (Russia), and the like. PSA fiber is commercially available as TANLON™ from Shanghai Tanlon Fiber Co., Ltd. (China). However, the aramid fiber is not limited to the abovementioned products.

### Woven Fabric (a)

Finer fibers are more costly to manufacture and to weave, but can produce greater effectiveness per unit weight. Considering the effectiveness and cost, each yarn, which includes a plurality of fibers, has a preferred linear density of from 200 denier (220 dtex) to 3,000 denier (3300 dtex), more preferably from 400 denier (440 dtex) to 2,400 denier (2640 dtex), and most preferably from 1,000 denier (1100 dtex) to 2,000 denier (2200 dtex).

Fibers or yarns employed in the woven fabric (a) of this invention may be fibers which exhibit a tenacity of from 10 g/denier to 50 g/denier, an elongation to break of from 1.0% to 6%, and a modulus of from 34 GPa (270 g/denier) to 254 GPa (2000 g/denier), each as measured by ASTM D7269.

Woven fabrics generally have a plurality of warp yarns running lengthwise in the machine direction, and a plurality of weft yarns running substantially perpendicularly to the warp yarns. Any weave construction or pattern of the woven fabrics may be used, for example, plain weave, twill weave, satin weave, basket weave, and the like.

Although woven fabrics suitable for the invention have no specific requirement for tightness of weave, except to avoid extremely tight weaves that lead to damage of fibers.

The basis weight (or areal density) of the woven fabric (a) prior to impregnation is generally ranging from 30 g/m² to 660 g/m²; preferably, from 60 g/m² to 460 g/m²; and more preferably, from 90 g/m² to 260 g/m².

### Unidirectional Fabric (b)

In the present invention, the fibers suitable to be employed in the unidirectional fabrics (b) are high modulus fibers produced from poly(p-phenylene terephthalamide) or poly(p-phenylene terephthalamide) copolymer.

A high modulus fiber is one which has a tenacity of at least 2500 MPa (20 g/denier), a tensile modulus of at least 100 GPa (787 g/denier), and an elongation of 3 % or less, each as measured by ASTM D7269.

In some embodiments, the fibers employed in the unidirectional fabric (b) have a tensile modulus of at least 100 GPa, and preferably, at least 110 GPa.

Suitable high modulus p-aramid fibers are commercially available such as KEVLAR® K49 from DuPont, TWARON® D2200 from Teijin (Japan), HECRCRON® HF-300 from Kolon Industries, Inc. (Korea), and ALKEX® HM from Hysung product (Korea).

Unidirectional fabrics generally comprise a plurality of fibers or yarns arranged in a unidirectional and parallel array, which may have a weft line crossed at a certain distance, and where the fibers or yarns are optionally but preferably coated with a matrix resin to stabilize the structure.

As is conventionally known in the art, excellent mechanical strength is achieved when individual plies of the UD fabrics are crossplied such that the fiber alignment direction of one ply is rotated at an orientation angle with respect to the fiber alignment direction of another ply. For example, the UD fabric with 2 plies per layer is generally having the 2 plies oriented perpendicular relative to each other, or, being crossplied at angles of 0° and 90°. This arrangement is depicted as [0/90]. In this convention, the orientation angle is in negative degrees if it has a "-" symbol (i.e. counterclockwise rotation) and it is in positive degrees if it has either a "+" symbol or no symbol (i.e. clockwise rotation). Further examples include a 3 plies per layer UD fabric with orientation angles being [0/90/0], and 5 plies per layer UD fabric with orientation angles being [0/45/90/45/0] or [0/-20/0/+20/90]. Such rotated unidirectional alignments are described, for example, in U.S. Pat. Nos. 4,457,985; 4,748,064; 4,916,000; 4,403,012; 4,623,574; and 4,737,402, all of which are incorporated herein by reference to the extent not incompatible herewith.

The orientation angles of the multi-plies UD fabric are all in relation to the longitudinal axis of the top layer of the UD fabric. Moreover, all such angles are approximate, as of course it is not technically feasible for every fiber in a particular layer to have a precise orientation of, e.g., -20°.

Suitable UD fabric (b) for the present composite laminate contains at least two plies per layer. In one embodiment, the UD fabric (b) contains two plies per layer and are crossplied with orientation angles being [0/90]. In another embodiment, the UD fabric (b) contains three plies per layer and are crossplied with orientation angles being [0/90/0].

The basis weight of a layer of the UD fabric (b) prior to impregnation is generally ranging from 20 g/m² to 660 g/m²; preferably, from 50 g/m² to 400 g/m²; and more preferably, from 80 g/m² to 200 g/m².

### Matrix Resin & Application

To provide the inventive composite laminate of suitable structural rigidity and stiffness performance, the woven fabric (a) and the UD fabrics (b) are each independently embedded in a thermoset resin as matrix. The main applications of the inventive composite laminate are housing or protective covers for mobile electronic devices, thus, there is needed a superior combination of rigidity and stiffness (as characterized by the flexural modulus). It is known that high tensile modulus resin as matrix also helps in yielding higher rigidity composites.

As used herein, the term "tensile modulus" means the modulus of elasticity as measured by ASTM D7269 for a fiber and by ASTM D638 for a thermoset resin.

For the purposes of this invention, a high modulus resin has a tensile modulus measured at 41.4 MPa (6,000 psi) or more. Preferably, the high modulus resin has a tensile modulus of 55.2 MPa (8,000 psi) or more.

The matrix resin is preferably selected from the group consisting of epoxy resins, polyimide resins, and mixtures thereof.

In a preferred embodiment, the thermoset resin is an epoxy resin selected from the group consisting of phenolic glycidyl ethers, aromatic glycidyl ethers, glycerol polyglycidyl ethers, glycidyl amines, and cycloaliphatics.

Examples of epoxy resins include but not limited to ARALDITE™ MY-720 from Huntsman Advanced Materials; EPIKOTE™ EP815, EP828, EP834 and EP807 from Yuka Shell Epoxy Co.; EPOMIK™ R-710 from Mitsui Petrochemical; EPICLON™ EXA1514 from Dainippon Ink and Chemicals Inc.; Sumi-epoxy ELM-120 and ELM-100 from Sumitomo Chemical Co. Ltd.; and GAN (N,N-diglycidyl aniline) from Nippon Kayaku Co., Ltd..

Suitable thermoset polyimides are known to those of ordinary skill in the art. The polyimide resin may be produced by condensation of a dianhydride such as pyromellitimide dianhydride with a diamine such as metaphenylene diamine, 4,4'-diaminodiphenylether or benzidine. An organic solvent such as N-methyl pyrrolidone, toluene, xylene, methyl Cellosolve™ or ethanol can be used if needed to dilute the polyimide resin and provide effective impregnation of the fabric layers.

Examples of suitable polyimide resins are available commercially including SKYBOND® from Industrial Summit Technology Corp. (USA) and VESPEL® from DuPont company.

The woven fabric (a) and the UD fabric (b) can each independently comprise the matrix resin selected from the group consisting of epoxy resins, polyimide resins, and mixtures thereof. For the purpose of easy processing, preferably, the woven fabric (a) and the UD fabric (b) comprise the same matrix resin or resin mixture.

The same or different matrix resins or resin mixtures may be applied to the woven fabric (a) and the UD fabric (b) before the assembly of them to form a preform. Thus, both of the woven fabric (a) and the UD fabric (b) may be "prepegs."

As used herein, the term "impregnated with" is synonymous with "embedded in" as well as "coated with" or otherwise "applied with" where the matrix resin will diffuse into the woven fabric (a) and/or the UD fabric (b) and is not simply on the surface of them.

Techniques for forming impregnated UD fiber plies, UD fabric, and woven fabrics are well known in the art. For example, the matrix resin may be applied in solution, emulsion, or dispersion form by spraying, by melting and extruding the resin, or roll coating the matrix resin solution onto fiber or fabric surfaces, followed by drying. The matrix resin solution comprises the desired one or more matrix resins and a solvent capable of dissolving or dispersing them.

The fibers of the UD fabric may be coated with the matrix resin either before or after the fibers are arranged into one or more UD plies, whereas the matrix resin is typically applied to the fibers of the woven fabric after weaving. However, the invention is not intended to be limited by the stage at which the matrix resin is applied to the fibers, nor by the means used to apply the matrix resin.

In one embodiment, in the present composite laminate, the woven fabric (a) comprises the thermoset resin in an amount of from 20 weight % to 80 weight %, or 40 weight % to 60 weight % or even from 40 weight % to 50 weight % based on the combined weight of the woven fabric (a) plus resin.

In another embodiment, in the present composite laminate, the unidirectional fabric (b) comprises the thermoset resin in an amount of from 20 weight % to 80 weight %, preferably, 40 weight % to 60 weight % or even from 40 weight % to 50 weight % based on the combined weight of the unidirectional fabric (b) plus resin.

### Preparation of the Composite Laminate

Methods of consolidating the woven fabric (a) and multiple layers of UD fabrics (b) to form the composite laminates are well known.

Typically, consolidation is done by positioning the individual layers on one another at the specified orientation angles with respect to the longitudinal axis of the top layer of the composite laminate under conditions of sufficient temperature and pressure to cause the layers to combine into a unitary laminate. Suitable temperatures, pressures and times are generally dependent on the type of matrix resins, matrix resins content, process used and fiber type of the fabric layers. Suitable methods for consolidating the composite laminate of the present invention include oven curing, autoclave curing, compression molding, resin transfer molding (RTM), or vacuum assisted transfer molding (VARTM). The consolidation may be conducted in an oven, an autoclave, a hot press, a resin transfer mold, or vacuum assisted transfer mold. Consolidation may typically be done at temperatures ranging from 50°C to 200°C, preferably from 90°C to 180°C, more preferably from 110 °C to 160 °C, and most preferably from 120 °C to 140 °C, and at pressures ranging from 0.034 MPa (5 psi) to 34.5 MPa (5000 psi), for from 10 seconds to 24 hours, preferably from 60 seconds to 2 hours. When heating, it is possible that the matrix resin can be caused to stick or flow. However, generally, if the matrix resin is caused to melt, relatively little pressure is required to form the laminate, while if the matrix resin is only heated to a sticking point, more pressure is typically required.

The composite laminate of the invention may also be made by a so-called prepreg process which employs a layer of woven fabric (a) and multilayers of UD fabrics (b), both were pre-impregnated with matrix resin by the methods mentioned above. For example, the UD fabric may be sold in prepreg form, where the high modulus p-aramid fibers arranged in a single ply have been impregnated with a specified resin, supported on a paper-backed release liner, and stored in a freezer in rolls until used to prevent premature curing. Similarly, the woven fabric (a) may also be sold in prepreg form, where the aramid fibers were woven into desired weave pattern and impregnated with a specified resin, supported on a paper-backed release liner, and then stored in a freezer in rolls. Upon use, the prepregs of the woven fabric (a) and the UD fabrics (b) can be removed from the freezer and cut to the desired size for layup. A release liner or peel ply is placed on the tool or mold upon which a prepreg layer of the woven fabric (a), followed by at least one prepreg layer of UD fabric (b) is laid up in the desired order and orientation. After several prepreg layers of UD fabric (b) have been placed to obtain a preform. Afterwards, a debulking process usually occurs where vacuum is applied to a peelable sealing film cover the preform to remove entrapped air.

The release liner is made from paper having a releasing substance coated on the surface that typically has a three-layer structure: the first layer being a paper sheet, the second layer being a laminated film, and the third layer being silicone oil. There is no particular limitation to the suitable release liner, one skilled in the art can select different release liners according to needs and costs.

The total number of fabric layers forming a composite laminate or an article of the invention may vary as determined by one skilled in the art depending upon the desired end use of the composite laminate or article. The greater the number of layers of UD fabrics (b) may or may not translate into higher flexural modulus (or more rigid structure) of the composite laminate, but certainly greater weight and thickness. Considering the main applications of the inventive composite laminates include housing or protective covers for 3C (i.e. computers, communications, and consumer electronics) products, and the trend of them is lighter and thinner, the weight and thickness of the composite laminate are thus preferably lighter and thinner. Except the one layer of woven fabric (a), the number of UD fabric layers (b) of the inventive composite laminate is generally no more than 10, preferably, from 1 to 5. Therefore, the total number of fabric layers of the inventive composite laminate is at least 2, and preferably from 2 to 6.

In one embodiment of the present invention, the composite laminate has 2 to 11, preferably, 2-6 fabric layers in total.

The total number of fabric layers is not narrowly critical; rather, the total number of fabric layers is selected as is necessary to achieve the overall composite laminate thickness. The inventive composite laminate after consolidation generally has a total thickness of from 0.1 mm to 2 mm, preferably, from 0.3 mm to 1.5 mm, more preferably, from 0.5 mm to 1 mm. The inventors found that by controlling the average thickness per layer of the composite laminate ranging from 0.2 mm to 0.35 mm to provide products having excellent rigidity and stiffness. The optimal thickness of a fabric layer can be achieved by adjusting the matrix resin content, debulking duration, temperature and pressure used during curing or molding process.

In the case of oven curing, the preform is placed in a forced air convection oven where the temperature is controlled through a predetermined cycle as recommended by the manufacture. There is a preheat cycle and a cool down cycle, too. The preform is under vacuum at all times during the curing process.

In the case of autoclave curing, the preform is placed in an autoclave where vacuum is applied as in the oven curing except additional pressure is applied via the autoclave to get a tighter packing of the fabric layers. Typical pressures applied by the autoclave can be 0.34 MPa to 1.03 MPa in addition to the pressure on the preform caused by the vacuum bag on the preform. The curing process is the same as the oven curing.

Alternately, consolidation may be achieved by molding such as compression molding, RTM, or VARTM under heat and pressure in a suitable molding apparatus. Generally, molding is conducted at a pressure of from 0.3 MPa to 34.5 MPa, more preferably 0.7 MPa to 20.7 MPa, most preferably from 1.0 MPa to 10.3 MPa. The molding may take from 10 seconds to 120 minutes. Preferred molding temperatures range from 90°C to 180°C, more preferably from 110°C to 160°C, and most preferably from 120°C to 140°C.

The composite laminate of the present invention, as a general proposition, provides surprisingly improvement in flexural modulus than the comparative laminates of similar thickness. Said comparative laminates consist of more than one layer of woven fabric (a) or have layers of UD fabric (b) made of medium modulus p-aramid fibers.

Additional optional materials may be applied to the composite laminate, such as a sealing materials, ultraviolet or sunlight protection materials, and materials that provides the composite laminate with a non-skid surface.

Articles comprising or produced from the inventive composite laminate have high structural integrity, in other words, they have excellent stiffness to weight ratio, high resistance against deflection or physical deformation. Therefore, articles of the present invention are useful as housings or a protective covers for mobile electronic devices, where minimum structural weight is required. Examples of mobile electronic devices include but not limited to handheld computers, tablet computers, mobile phones, e-readers, portable game devices, portable media players, or digital cameras. Examples of mobile phones include but not limited to flip phones, slider phones, radio telephones, cellular phones, smart phones, etc.

Without further elaboration, it is believed that one skilled in the art using the preceding description can utilize the present invention to its fullest extent. The following Examples are, therefore, to be construed as merely illustrative, and not limiting of the disclosure in any way whatsoever.

### EXAMPLES

The abbreviation "E" stands for "Example" and "CE" stands for "Comparative Example" is followed by a number indicating in which example the composite laminate is prepared. The examples and comparative examples were all prepared and tested in a similar manner. Percentages are by weight unless otherwise indicated.

### Materials

Woven fabric (a1): Twill weave fabric produced from poly(p-phenylene terephthalamide) yarns, wherein black Kevlar® K29 1500 denier (1670 dtex, available from DuPont) as warp yarns and gray Technora® 1500 denier (1670 dtex, available from Teijin) as weft yarns. The woven fabric was made at 7 x 7 ends/cm², with a basis weight prior to impregnation was about 225 g/m². After impregnating with epoxy resin, the basis weight of the woven p-aramid prepreg (al) was about 368 g/m² and was purchased from Xin Xiu Electronics Co., Ltd. The resin content was about 39 weight % of the total weight of the woven p-aramid prepreg (a1).

Woven fabric (a2): Twill weave fabric produced from poly(m-phenylene terephthalamide) yarns of 1200 denier (1334 dtex), (Nomex® white, color, available from DuPont) for warp and weft yarns. The woven fabric was made at 9 x 9 ends/cm², with a basis weight prior to impregnation was about 247 g/m², was purchased from Chomarat Co.. The prepreg was prepared by melting an epoxy resin purchased from Jiangsu Tianiao High Tech. Co. onto the woven fabric using a hot press (manufactured by PHI). First step of the impregnation was to place a first release paper (purchased from Jiangsu Tianiao High Tech. Co.) down in the mold cavity that was preheated to 80°C in the hot press. The epoxy resin weighing about 25 weight % of the combined weight of woven fabric plus resin was spread evenly on the first release paper to provide a first resin coating and laid down on one surface of the woven fabric. A second resin coating of a similar amount to the first coating was coated onto a second release paper and subsequently placed onto the other surface of the fabric so as to sandwich the fabric between two resin layers. After sealing, the mold was placed back in the hot press, heated at 80°C for 5 min, and then pressed for 2 min with a pressure of 0.5 MPa. The mold was taken from the hot press and cooled to room temperature. The impregnated woven fabric having release papers on both side was removed from the mold and ready for use. The resin content was about 52 weight % of the combined weight of the woven m-aramid prepreg (a2) plus resin.

UD fabric (b1): The UD fabric was produced from high modulus poly(p-phenylene terephthalamide) fiber of 1422 denier (1580 dtex, Kevlar® 1W003 K49), having a modulus of 112.4 GPa and a breaking tenacity of 3000 MPa (23.6 g/denier). The UD fabric was made at approximately 6 ends per cm. The width of UD fabric was about 102 cm, thickness was about 0.15 mm, and the basis weight prior to impregnation was about 140 g/m². After impregnating with an epoxy resin (available from Xin Xiu Electronics Co., Ltd.), the basis weight of the UD prepreg was about 224 g/m². The resin content was about 38% by weight of the total weight of the UD prepreg (b1) and was purchased from Jiangsu Tianiao High Tech. Co.

UD fabric (b2): The UD fabric produced from medium modulus poly(p-phenylene terephthalamide) fiber, 1500 denier (1670 dtex, Kevlar® 1K211 K29, available from DuPont), having a modulus of 70.5 GPa and a breaking tenacity of 2920 MPa (23 g/denier). The UD fabric was made at approximately 6 ends per cm. The width of UD fabric was about 30 cm, and the thickness was about 0.12 mm, and the basis weight prior to impregnation was about 100 g/m². The UD prepreg was prepared by coating an epoxy resin solution (about 50 % by weight in acetone) purchased from Jiangsu Tianiao High Tech. Co. on to the UD fiber arrays with a release paper as backing. After coating, the UD prepreg was dried in a hood at room temperature for 12 hours. After impregnating with epoxy resin, the basis weight of the UD prepreg (b2) was about 220 g/m² and a thickness of about 0.15 mm. The resin content was about 55% by weight of the total weight of the UD prepreg (b2).

### General Procedures for Making the Composite Laminates of Examples 1-5 and

### Comparative Examples 1-6

The composite laminate of working examples 1-5 and comparative examples 1-6 were prepared by the compression molding method.

The woven and UD fabrics were cut into a 25 cm x 25 cm square. A pair of stainless steel molds (composed of two 35 cm x 35 cm x 1.5 cm stainless steel plates) was applied for molding. The temperature of the hot press machine (manufactured by PHI) was set at 130°C. The mold was pre-heated in the hot press machine to 130°C. The mold was taken out of the hot press machine and opened, first placed a release paper (provided by Jiangsu TianNiao high tech. Co.) in the mold to facilitate eventual removal of the cured laminate from the mold. Afterwards, a layer of the woven fabric (a) was laid over the release paper. In the cured laminate, this woven fabric layer will be the top layer in the composite laminate. Then additional layers of 2-ply UD fabrics (25 cm x 25 cm), or one or more woven or UD fabrics (25 cm x 25 cm) were laid to obtain a preform with several distinct layers of various orientations as specified in Table 2. After laying the preform, a second release paper was placed over the preform, and the mold was closed. The closed mold was put back into the hot press, then lamination was carried on at 130°C with a pressure of 1.3 MPa for 1 hour. After curing, the mold was taken out of the hot press and cooled to room temperature. The lid was removed from the mold, followed by removal of the second release paper. The cured laminate was removed from the mold, and peeled off the first release paper.

### Test Methods

Each cured laminate was cut to 6 test specimens with a rectangle shape of 50.8 mm x 12.7 mm by laser cutting machine (Han's Laser Co., model: P060).

The thickness of the specimen was determined by micrometer caliper, each specimen was measured 3 times at different spots and the results was averaged and reported.

The flexural modulus of the specimen was measured by using an Instron® test machine (manufactured by Instron® company, model: 5567), with a sample span of 2.54 mm, crosshead speed of 2.5 mm/ min and a load of 5 kN according to ASTM D790.

**Table 2**

| Sample No. | Composite Laminate Construction¹ | Fiber Orientation^{1,2} | Laminate thickness (mm) | Flexural Modulus (GPa) |
|---|---|---|---|---|
| CE1 | a1:a1:a1 | w:w:w | 0.90 | 17.5 |
| CE2 | a1:b1:a1 | w:90/0:w | 0.80 | 11.0 |
| CE3 | a1:a1:b1 | w:w:90/0 | 0.80 | 14.9 |
| CE4 | a1:b2:b2 | w:90/0:90/0 | 0.84 | 12.7 |
| E1 | a1:b1:b1 | w:90/0:90/0 | 0.73 | 39.4 |
| E2 | a1:b1 | w:90/0 | 0.50 | 39.3 |
| E3 | a1:b1:b1:b1:b1 | w:0/90:90/0:0/90:90/0 | 1.25 | 35.2 |
| CE5 | a2:a2:a2 | w:w:w | 0.8 | 3.6 |
| CE6 | a2:bl:a2 | w:90/0:w | 0.86 | 4.4 |
| E4 | a2:b1:b1 | w:90/0:90/0 | 0.90 | 10.8 |
| E5 | a2:b1 | w:90/0 | 0.61 | 9.9 |

| | | | | |
|---|---|---|---|---|
| ¹The ":" is used to separate each fabric layer regardless of the fabric structure being woven or UD; whereas "/" is used to separate each ply of a UD fabric layer. ²The woven fabric is represented by "w", while fiber orientation of each ply of a UD fabric layer is represented by the angle number, in degree, versus the longitude axis of the composite laminate. | | | | |

From the results of Table 2, the following descriptions are evident.

Comparing between E1 and CE1-CE3, that have the same number of total fabric layers but different construction, the composite laminate of E1 provides surprising improvement in flexural modulus than what is expected from a simple sum of the individual elements of the combination. Analogously, comparing between E4 and CE5-CE6, that have the same number of total fabric layers but different construction, the composite laminate of E4 provides surprising improvement in flexural modulus.

Comparing between E1 and CE4, the excellent flexural modulus data of the composite laminate of E1 may attributed to the incorporation of high modulus fibers in the UD fabric (b).

It is noted that the present composite laminates (E1-E3 and E4-E5) provide excellent flexural modulus in view of their respective comparative examples with different thickness. One skilled in the art can thus select appropriate number of UD fabric layers (b) in the present composite laminate for a particular application.

## Claims

1. A composite laminate consisting of:
(a) a layer of a woven fabric as the top layer; and
(b) at least one layer of a unidirectional fabric;
wherein
the composite laminate has a total thickness of from 0.1 mm to 2 mm;
the woven fabric (a) comprises fibers produced from poly(p-phenylene terephthalamide) homopolymer, poly(p-phenylene terephthalamide) copolymer, poly(m-phenylene isophthalamide) homopolymer, poly(m-phenylene isophthalamide) copolymer, polysulfonamide homopolymer, polysulfonamide copolymer, and mixture thereof;
the unidirectional fabric (b) comprises high modulus fibers produced from poly(p-phenylene terephthalamide) homopolymer or poly(p-phenylene terephthalamide) copolymer, the fibers having a tensile modulus of at least 100 GPa; and
the woven fabric (a) and the unidirectional fabric (b) each independently comprise a thermoset resin selected from epoxy, polyimide, and mixtures thereof.

2. The composite laminate of claim 1, wherein the unidirectional fabric (b) contains two plies or three plies per layer, and they are crossplied respectively with orientation angles being [0/90] or [0/90/0] relative to the longitude axis of the composite laminate.

3. The composite laminate of claim 1, wherein the thermoset resin is an epoxy resin selected from the group consisting of phenolic glycidyl ethers, aromatic glycidyl ethers, glycerol polyglycidyl ethers, glycidyl amines, and cycloaliphatics.

4. The composite laminate of claim 1, wherein the basis weight of woven fabric (a) is from 30 g/m² to 660 g/m².

5. The composite laminate of claim 1, wherein the basis weight of the unidirectional fabric (b) is from 20 g/m² to 660 g/m².

6. The composite laminate of claim 1, wherein the woven fabric (a) is impregnated with thermoset resin in an amount of from 20 weight % to 80 weight % based on the combined weight of the woven fabric (a) plus resin.

7. The composite laminate of claim 1, wherein the unidirectional fabric (b) is impregnated with thermoset resin in an amount of from 20 weight % to 80 weight % based on the combined weight of the unidirectional fabric (b) plus resin.

8. An article comprising the composite laminate of claim 1, wherein the article is a housing or a protective cover for a mobile electronic device.

9. The article of claim 8, wherein the mobile electronic device is a handheld computer, a tablet computer, a mobile phone, an e-reader, a portable game device, a portable media player or a digital camera.

## Patentansprüche

1. Verbundstofflaminat bestehend aus:
(a) einer Schicht aus einem gewobenen Textilstoff als oberer Schicht; und
(b) mindestens einer Schicht aus einem unidirektionalen Textilstoff;
wobei das Verbundstofflaminat eine Gesamtdicke von 0,1 mm bis 2 mm aufweist;
der gewobene Textilstoff (a) Fasern umfasst, die aus Poly(p-phenylenterephthalamid)-Homopolymer, Poly(p-phenylenterephthalamid)-Copolymer, Poly(m-phenylenisophthalamid)-Homopolymer, Poly(m-phenylenisophthalamid)-Copolymer, Polysulfonamid-Homopolymer, Polysulfonamid-Copolymer und einer Mischung davon hergestellt sind;
der unidirektionale Textilstoff (b) Hochmodulfasern umfasst, die aus Poly(p-phenylenterephthalamid)-Homopolymer oder Poly(p-phenylenterephthalamid)-Copolymer hergestellt sind, wobei die Fasern einen Zugmodul von mindestens 100 GPa aufweisen; und
der gewobene Textilstoff (a) und der unidirektionale Textilstoff (b) jeder unabhängig ein Duroplastharz umfasst ausgewählt aus Epoxid, Polyimid und Mischungen davon.

2. Verbundstofflaminat nach Anspruch 1, wobei der unidirektionale Textilstoff (b) zwei Lagen oder drei Lagen pro Schicht enthält und sie jeweils kreuzverzwirnt sind, wobei die Orientierungswinkel [0/90] oder [0/90/0] mit Bezug auf die Längsachse des Verbundstofflaminats betragen,

3. Verbundstofflaminat nach Anspruch 1, wobei das Duroplastharz ein Epoxidharz ist ausgewählt aus der Gruppe bestehend aus phenolischen Glycidylethern, aromatischen Glycidylethern, Glycerinpolyglycidylethern, Glycidylaminen und Cycloaliphaten.

4. Verbundstofflaminat nach Anspruch 1, wobei das Flächengewicht des gewobenen Textilstoffs (a) 30 g/m² bis 660 g/m² beträgt.

5. Verbundstofflaminat nach Anspruch 1, wobei das Flächengewicht des unidirektionalen Textilstoffs (b) 20 g/m² bis 660 g/m² beträgt.

6. Verbundstofflaminat nach Anspruch 1, wobei der gewobene Textilstoff (a) mit Duroplastharz in einer Menge von 20 Gew.-% bis 80 Gew.-%, auf das kombinierte Gewicht des gewobenen Textilstoffs (a) plus Harz bezogen, imprägniert wird.

7. Verbundstofflaminat nach Anspruch 1, wobei der unidirektionale Textilstoff (b) mit Duroplastharz in einer Menge von 20 Gew.-% bis 80 Gew.-%, auf das kombinierte Gewicht des unidirektionalen Textilstoffs (b) plus Harz bezogen, imprägniert wird.

8. Artikel umfassend das Verbundstofflaminat nach Anspruch 1, wobei der Artikel ein Gehäuse oder eine Schutzbedeckung für eine transportable elektronische Vorrichtung ist.

9. Artikel nach Anspruch 8, wobei die transportable elektronische Vorrichtung ein Handcomputer, ein Tablet-Computer, ein Handy, ein E-Reader, eine tragbare Game-Vorrichtung, ein tragbares Medienabspielgerät oder eine Digitalkamera ist.

## Revendications

1. Stratifié composite constitué de:
(a) une couche d'un textile tissé comme couche supérieure; et
(b) au moins une couche d'un textile unidirectionnel;
le stratifié composite ayant une épaisseur totale de 0,1 mm à 2 mm;
le textile tissé (a) comprenant des fibres produites à partir d'un homopolymère de poly(téréphtalamide de *p*-phénylène), de copolymère de poly(téréphtalamide de *p-*phénylène), d'homopolymère de poly(isophtalamide de *m*-phénylène), de copolymère de poly(isophtalamide de *m*-phénylène), d'homopolymère de polysulfonamide, de copolymère de polysulfonamide, et un mélange de ceux-ci;
le textile unidirectionnel (b) comprenant des fibres de module élevé produites à partir d'un homopolymère de poly(téréphtalamide de *p*-phénylène) ou d'un copolymère de poly(téréphtalamide de *p*-phénylène), les fibres ayant un module de traction d'au moins 100 GPa; et
le textile tissé (a) et le textile unidirectionnel (b) comprenant chacun indépendamment une résine thermodurcie sélectionnée parmi l'époxy, le polyimide, et des mélanges de ceux-ci.

2. Stratifié composite selon la revendication 1, le textile unidirectionnel (b) contenant deux plis ou trois plis par couche, et ils sont respectivement croisés sous des angles d'orientation étant de [0/90] ou [0/90/0] par rapport à l'axe de la longitude du stratifié composite.

3. Stratifié composite selon la revendication 1, la résine thermodurcie étant une résine époxy sélectionnée dans le groupe constitué des éthers de glycidyle phénoliques, des éthers de glycidyle aromatiques, des éthers polyglycidylique de glycérol, des amines de glycidyle, et des substances cycloaliphatiques.

4. Stratifié composite selon la revendication 1, le poids de base du textile tissé (a) étant de 30 g/m² à 660 g/m².

5. Stratifié composite selon la revendication 1, le poids de base du textile unidirectionnel (b) étant de 20 g/m² à 660 g/m².

6. Stratifié composite selon la revendication 1, le textile tissé (a) étant imprégné d'une résine thermodurcie en une quantité de 20 % en poids à 80 % en poids sur la base du poids combiné du textile tissé (a) plus de la résine.

7. Stratifié composite selon la revendication 1, le textile unidirectionnel (b) étant imprégné d'une résine thermodurcie en une quantité de 20 % en poids à 80 % en poids sur la base du poids combiné du textile unidirectionnel (b) plus de la résine.

8. Article comprenant le stratifié composite selon la revendication 1, l'article étant un boîtier ou un couvercle protecteur pour un dispositif électronique portable.

9. Article selon la revendication 8, le dispositif électronique portable étant un ordinateur de poche, un ordinateur type tablette, un téléphone portable, une liseuse, une console de jeu portable, un lecteur multimédia portable ou une caméra numérique.
